# EUROPEAN PATENT SPECIFICATION

(11) **EP 4 002 863 B1**
(45) Date of publication and mention of the grant of the patent: **30.08.2023**
(21) Application number: 20425049.2
(22) Date of filing: 12.11.2020
(51) Int. Cl.: H04Q 11/00

(54) **METHOD OF OPERATING AN OPTICAL NETWORK UNIT, AND AN OPTICAL NETWORK UNIT, OPTICAL LINE TERMINAL AND COMPUTER SOFTWARE FOR PERFORMING THE METHOD**
VERFAHREN ZUM BETRIEB EINER OPTISCHEN NETZWERKEINHEIT UND OPTISCHE NETZWERKEINHEIT, OPTISCHER LEITUNGSANSCHLUSS UND COMPUTERSOFTWARE ZUR DURCHFÜHRUNG DES VERFAHRENS
PROCÉDÉ DE FONCTIONNEMENT D'UNE UNITÉ DE RÉSEAU OPTIQUE, ET UNITÉ DE RÉSEAU OPTIQUE, TERMINAL DE LIGNE OPTIQUE ET LOGICIEL INFORMATIQUE POUR LA MISE EN OEUVRE DU PROCÉDÉ

(43) Date of publication of application: 25.05.2022
(73) Proprietor: Vodafone Group Services Limited, Newbury RG14 2FN (GB); Vodafone Italia S.p.A., 10015 Ivrea (TO) (IT)
(72) Inventor: Dawes, Peter Robert, London, W2 6BY (GB); Cornaglia, Bruno, London, W2 6BY (GB)
(74) Representative: Boult Wade Tennant LLP

(56) References cited:
- EP-A1- 2 566 112
- WO-A1-2013/014483
- US-A1- 2013 071 111
- ONN HARAN PMC-SIERRA ISRAEL: "ONU power-save annex", ITU-T DRAFT ; STUDY PERIOD 2005-2008, INTERNATIONAL TELECOMMUNICATION UNION, GENEVA ; CH, vol. 2, 1 April 2008 (2008-04-01), pages 1-12, XP017528316, [retrieved on 2008-06-19]
- EDITORS G 984 3: "White Paper: Means and impact of GPON power conservation;97 (WP 1/15)", ITU-T DRAFT ; STUDY PERIOD 2009-2012, INTERNATIONAL TELECOMMUNICATION UNION, GENEVA ; CH, vol. 2/15, 30 November 2008 (2008-11-30), pages 1-53, XP017444919, [retrieved on 2008-11-30]

## Description

### Technical Field

The present invention relates to Gigabit-capable Passive Optical Networks or Active Optical Networks, dynamic bandwidth allocation and power saving schemes deployed in such networks.

### Background

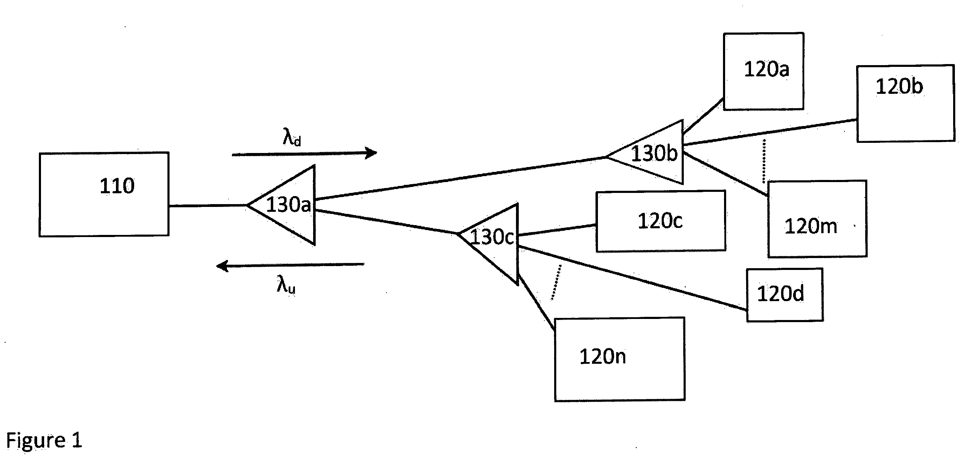

Figure 1 illustrates a Passive Optical Network (PON) 100. One common example of a Passive Optical Network is known as a Gigabit-capable Passive Optical Network (GPON), another is 10-Gigabit-capable Passive Optical Network (XG-PON) and another is a 50-Gigabit-capable Passive Optical Network (50G PON). In the Passive Optical Network illustrated in Figure 1, an Optical Line Terminal (OLT) equipment 110 transmits light downstream towards one or more customer equipment devices, each of which is an Optical Network Unit (ONU) 120a - 120n. Alternatively, one or more of the customer equipment devices may be an Optical Network Termination (ONT). This light is split by one or more passive and purely optical devices 130a - 130c so that all ONUs receive the same light signal. Each optical device 130a - 130c may be a passive optical splitter and may divide the downstream beam so that it may be sent across different fibres. For example, splitter 130a may be a 1:2 splitter, 130b may be a 1:32 splitter and 130c may be 1 1:64 splitter.

Light travelling in the downstream direction (i.e. from the OLT to the ONUs) has a wavelength of λ_{d}, which is for example 1490nm for GPON. Light travelling in the upstream direction (i.e. from an ONU to the OLT) has a wavelength of λᵤ, which is for example 1310nm for GPON.

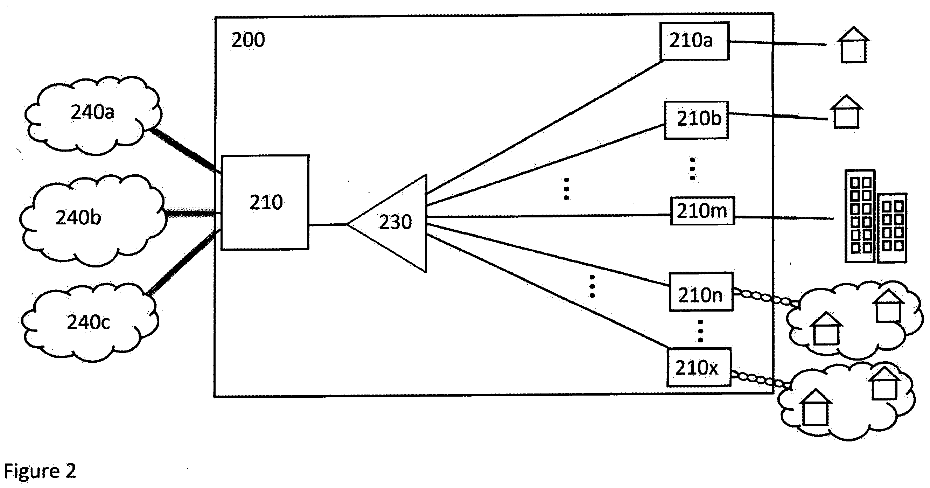

Figure 2 illustrates another PON 200. The PON comprises an OLT 210, one or more ONUs (and/or ONTs) 220a - 220x, and a passive optical splitter 230. Each ONU may serve a domestic/commercial premises or multiple premises. The OLT may be connected to one or more networks 240a - 240c. For example, the OLT may be connected to the Public Service Telephone Network (PSTN), the internet and/or an Internet Protocol Television (IPTV) work.

Upstream (e.g. from an ONU to the OLT) and downstream (from the OLT to an ONU) signals in a PON are usually transmitted through the same optical fibre and distinguished from each other by the respective light wavelengths of upstream and downstream signals being different. All the ONUs may receive the same downstream signals, each decoding only the information directed to its respective ID. The OLT schedules upstream transmission from the ONUs such that only one ONU transmits at a time.

The time during a frame at which an ONU may transmit data varies from frame to frame. This is so that the OLT can allocate more time to ONUs that have more data to transmit. Adjusting the allocation of transmit time across ONUs by the OLT is known as dynamic bandwidth allocation. ITU-T G.984.3 Amendment 1 (03/2020) describes dynamic bandwidth allocation techniques.

In the upstream direction, the OLT controls when each ONU is allowed to transmit, in order to prevent more than one ONU transmitting at a given time. If multiple ONUs were to transmit simultaneously then they would interfere with each other's signal. Scheduling of ONU upstream transmissions may be achieved by sending a bandwidth map (BWmap) of ONU identities and start times and stop times (or start times and durations) for transmission during an upstream frame.

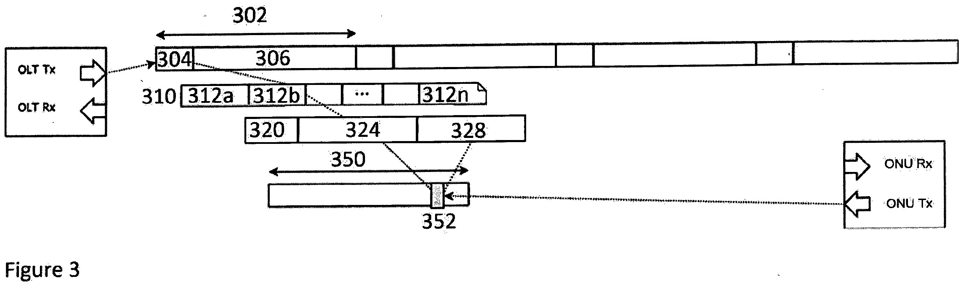

Figure 3 illustrates an example of downstream and upstream transmissions in a PON (such as a GPON). Transmissions are split into frames having equal duration. These frames are defined in the the applicable Transmission Control protocol (GPON Transmission Control Protocol, GTC, for GPON). Each downstream frame 302 may have a duration of 125µs and comprises a header 304 (also called downstream Physical Control Block, PCBd) and a data portion 306 (also called a TC payload).

The header of a downstream frame comprises a bandwidth map (BWmap) 310. The BWmap tells each ONU in the GPON when it can transmit during a coresponding upstream frame 350 and comprises one or more allocation structures 312a - 312n. Each allocation structure comprises an identifier 320 corresponding to the ONU to which the allocation relates, a start time 324 and a grant size 328. The start time indicates the location of the first byte during the upstream frame at which a transmit opportunity 352 of the ONU begins and may be a 16-bit number. The grant size indicates the number of bytes of data that may be sent during the upstream frame during the transmit opportunity 352. The start time may not be absolute but rather relative to the start of the frame. The start time may be expressed as a number of counts from a certain relative time (such as the start of the upstream frame). ONUs may be allocated multiple transmit opportunities in a single frame, as defined in the BWmap.

The term "frame" in this context refers to a GTC, XGTC frame or any other PON technology frame (either upstream or downstream), unless otherwise specified.

To exchange Operation and Management information, the OLT and the ONU may send and receive messages using a Physical Layer Operation and Management (PLOAM) channel. In the downstream direction, the PCBd may comprise a downstream PLOAM field (PLOAMd) used by the OLT to send PLOAM messages to the ONUs.

In accordance with allocations made by the OLT, the upstream frame comprises a plurality of transmissions from the plurality of ONUs in the GPON. In a similar manner to downstream transmissions, each upstream data transmission, comprises a TC header and a TC payload. The upstream TC header (also called TC overhead) may comprise an upstream PLOAM message (PLOAMu) used by the ONU to send PLOAM messages to the OLT.

The PLOAM channel is sometimes known as a "messaging channel".

The TC payload (either upstream or downstream) may comprise data sent between the OLT and the ONU by the relevant PON Encapsulation Method (GEM for GPON, XGEM for XG-PON). This data may be organised into one or more GEM frames. These frames are different to the GTC frames described above and will be referred to in this application as "GEM frames".

Another way in which the ONUs can be managed is via an ONU Management and Control Interface (OMCI). A management station can communicate with an ONU via OMCI by sending data in GEM frames that contain a Port-ID equal to the ONU identifier of that ONU. The OMCI channel may be used for handshaking and initial configuration and configuration changes that happen infrequently. The OMCI channel is sometimes known as a "management channel".

Passive optical networks designed for fibre to the home service are currently designed with a number of power-saving modes. These power saving modes are configured using management messages sent from the central office equipment (OLT) to the customer premises equipment (ONU) and subsequently activated and deactivated on-the-fly by control messages in the PLOAM (physical layer management) channel.

To minimize power consumption, the ONUs can offer a number of existing sleep modes during which they power down their receiver, transmitter, or both. ITU-T Series G Supplement 45 (05/2009) "GPON Power Conservation" describes methods of reducing power consumption in a Passive Optical Network. There are various kinds of sleep modes in use, such as 'watchful sleep mode' (or 'cyclic sleep mode').

In Fast Sleep, the OLT broadcasts a Sleep PLOAM message to all ONUs in Fast Sleep mode indicating that the ONUs may sleep for a period before the next active frame. The message includes a sleep counter indicating the number of sleep frames before the next active frame. The ONU must wake up in time for the beginning of the frame so that it can perform synchronisation functions and receive a BWmap containing allocation data for the next upstream frame.

In cyclic sleep mode, the OLT sends a message to the ONU to allow the ONU to power down its transmitter and receiver for one or more complete frames. The ONU is separately configured with the number of sleep frames before the next active frame. When this number of frames has expired, the ONU powers up its receiver and transmitter as an opportunity to report its status to the OLT. The ONU must wake up periodically so that it can perform synchronisation functions, receive a BWmap containing allocation data for the next upstream frame, and optionally report its status to the OLT.

In Dozing mode, the ONU transmitter is powered down and the receiver remains active. The transmitter may remain powered down for multiple frames as long as there is nothing for the ONU to send. When the ONU exits Dozing mode (e.g. because it has data to send or because a command from the OLT), it powers up the transmitter and resumes sending upstream traffic in the timeslot allocated by the OLT, as described in the BWmap. As with standard dynamic bandwidth allocation, BWmap provides a timeslot for the next upstream frame.

Power shedding is supported autonomously and the ONU does not require any permission or data from the OLT to perform power shedding.

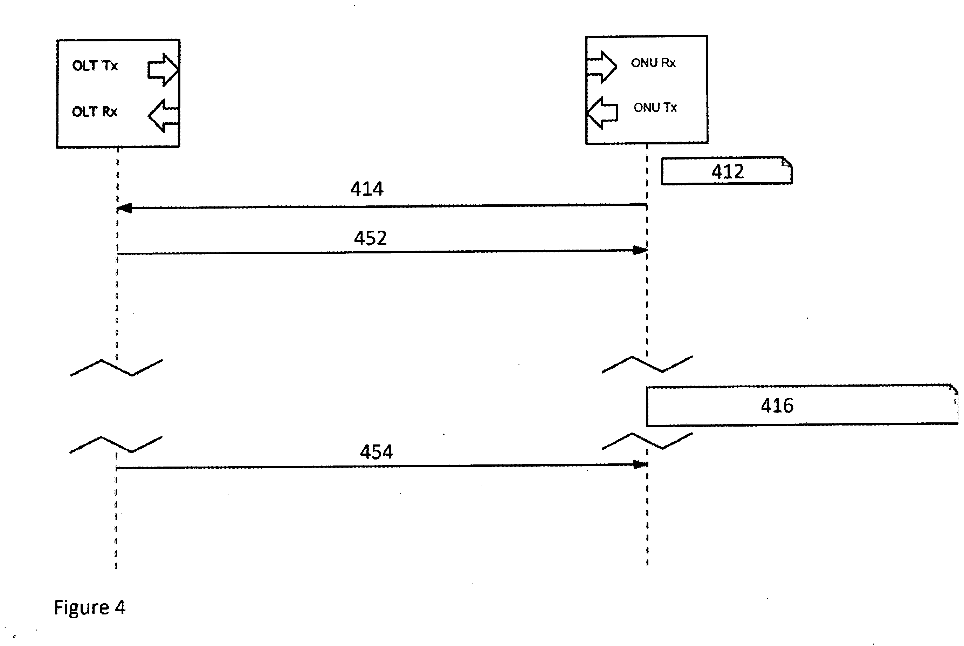

The prior art "cyclic sleep" mode of power saving is described in Figure 4.

The ONU 410 may determine that it has no data to send in its upstream data buffer (event 412). To save power, the ONU may send a "request to sleep" message 414 to the OLT 450. On receiving this request, the OLT may grant the request and send a "sleep allowed" message 452 to the ONU. On receipt of the sleep allowed message, the ONU powers down its receiver and transmitter for a predetermined number of 125µs frames (at event 416). The number is configured by the OLT. When the predetermined number of frames has elapsed, the OLT will allocate the ONU a transmit opportunity 454 in the BWmap of the next downstream frame. The ONU must have powered its transmitter and receiver up in time to receive the allocation and respond by transmitting data in the upload frame allocated by the OLT.

As described above, existing solutions provide a mechanism for an ONU to request to enter a sleep mode when the ONU detects that there is no data in its upstream buffer. The OLT can configure this request in advance (via the management (OMCI) channel) with the number of frames over which the ONU can sleep (at least one frame). The OLT can allow an ONU to sleep on a frame-by-frame basis by sending a "sleep allow" message in the messaging (PLOAM) channel The ONU can plan to power down its transmitter for the pre-configured number of frames. In normal (non-sleep) operation, the ONU must remain powered up once it has sent a data burst (within a frame) because it is not aware of when it will be required to send the next data burst in the subsequent frame, since this will be allocated in the subsequent management signal from the OLT.

The present proposal aims to reduce ONU power consumption by providing an improved power-saving mode.
WO 2013/014483, according to its abstract, discloses a device and method for scheduling traffic exchange in a passive optical network to reduce energy consumption.

### Summary

The claims define the subject-matter for which protection is sought. The present invention aims to reduce ONU power consumption by allowing the ONU to power down its transmitter data between transmit allocations. This is achieved by providing information to the ONU about when transmit opportunities will be allocated in upstream frames beyond the upstream frame to which the BWmap in the downstream frame refers.

A method of controlling an Optical Network Unit, ONU, in a Passive Optical Network, PON, is provided. The method comprises communicating a control message from an Optical Line Terminal, OLT, to the ONU. The control message comprises an indication of an earliest time during an upstream frame and one or more subsequent upstream frames at which the ONU will be allocated an opportunity to transmit data to the OLT.

By providing the ONU with an earliest time at which a transmit opportunity will be allocated in an upstream frame AND one or more subsequent upstream frames, the ONU can plan to place its transmitter in a low power mode between transmit opportunities. Placing the transmitter in a low power mode may include powering down, or in some examples switching off, the transmitter. The ONU may therefore reduce its power consumption. This may not be possible in existing systems because the ONU may be required to transmit near the start of an upstream frame and therefore must have the transmitter powered up and available in time for the earliest possible opportunity in the upstream frame.

The upstream frame may be the upstream frame to which the BWmap relates. In other words, the assurance from the OLT that the ONU will not be allocated a transmit opportunity earlier than the earliest time may take effect immediately.

The one or more subsequent upstream frames may be one or more immediately subsequent upstream frames.

The OLT may assure the ONU that the transmit opportunity for every frame, starting with the next upstream frame (the frame to which the BWmap relates), will be no earlier than the earliest time provided in the control message.

The indication of an earliest time may comprise an indication of the proportion of the upstream frame during which the ONU will not be allocated a transmit opportunity. Alternatively, the indication of an earliest time may comprise a time offset (in bytes) from the start of the frame. Since the offset may be provided in bytes (a number of blocks or counts), rather than in terms of a time (in microseconds, for example) the "indication of an earliest time" may equally be considered as an "indication of an earliest point" during the upstream frame. The duration of the frame may be 125 microseconds (µs). The indication of the earliest time may be towards the end of the frame (for example, the earliest time may be 50%, 60%, 70%, 80% or 90% of the way through the frame). For an upstream frame and one or more immediately subsequent upstream frames, the ONU shall not be an allocated an opportunity to transmit data to the OLT during an initial portion of the upstream frame between the start of the frame and the time offset. Other methods of indicating an earliest time in the frame may be used in accordance with conventions used for the StartTime field in a BWmap Allocation Structure. In this structure, a start time may be provided as an offset in bytes from the start of the upstream frame. The allocation may also include a number of bytes that the ONU is allowed to send, which determines the end time.

The method may further comprise communicating from the OLT to the ONU an instruction that the ONU should enter a power-saving mode.

Whilst the ONU is in the power saving mode, it may power down its transmitter between upstream transmit allocations. This may reduce the power consumption of the ONU.

The ONU may be configured to enter the power-saving mode within a predetermined number of frames after receiving the instruction that the ONU should enter the power-saving mode.

The ONU may need some time to react to the instruction from the OLT. In some examples, the ONU should enter the power saving mode within six frames of receiving the instruction from the OLT.

The control message may comprise an indication of a time during a corresponding upstream frame at which the ONU is allocated an opportunity to transmit data to the OLT. The control message and the instruction that the ONU should enter a power-saving mode may be communicated to the ONU in the same downstream frame. For example, the OLT may assure the ONU that allocations in each subsequent frame will be no earlier than the allocation in the current upstream frame (as defined in the BWmap).

As long as the ONU is not already in a sleep mode, the ONU may be allocated a transmit opportunity in every upstream frame. Therefore, the BWmap of every downstream frame may comprise an allocation of a transmit opportunity for the ONU. A particular downstream frame may comprise the control message that includes the earliest time at which the ONU will be asked to transmit for subsequent upstream frames. The earliest time may be the same as the start time of the transmit opportunity for the corresponding upstream frame.

The PCBd may contain a sleep allow message specific to this power saving method (which may be known as "sleep allow (spaced)") (in the PLOAMd field, for example). The earliest time may be explicitly sent to the ONU in the sleep allow message. Alternatively, the ONU may infer that the earliest time is the start time of the allocation provided in the BWmap in the PCBd of the same downlink frame.

Whilst in the power-saving mode, a transmitter of the ONU may be configured in a low-power state after an opportunity to transmit data to the OLT in a first upstream frame has ended. The transmitter may remain in the low-power state for a remaining portion of the upstream frame and an initial portion of a second upstream frame immediately subsequent to the first upstream frame. The transmitter may be configured in a transmission state for sending data to the OLT prior to the earliest time indicated in the control message during the second upstream frame.

By powering down the transmitter between allocations, the ONU may reduce overall power consumption, whilst continuing to transmit upstream data in each frame.

Whilst in the power-saving mode, a transmitter of the ONU may be configured in a transmission state for sending data to the OLT prior to the earliest time indicated in the control message during each upstream frame. The transmitter may be configured in a low-power state after an opportunity to transmit data to the OLT has ended in the respective upstream frame. The transmitter may remain in the low-power state for a remaining portion of the respective upstream frame and during an initial portion of an immediately subsequent upstream frame.

The transmitter may be is unable to send data to the OLT while in the low-power mode. The low power mode may be likened to turning off the transmitter. Although, power may still be consumed by the transmitter in the low power mode, this may be less than the power consumed by the transmitter in the transmission mode.

While in spaced sleep mode, the ONU may be required to power up transmitter and send for every frame allocation, even if there is nothing in buffer. This is in contrast to other sleep modes that power down the transmitter for more than a frame.

The method may further comprise communicating from the ONU to the OLT a request for the ONU to enter the power-saving mode. The instruction that the ONU should enter the power-saving mode may be communicated in response to the request.

In some examples, the ONU may specifically request to enter spaced sleep mode to save power. In other examples, the OLT may identify (from reports of buffer occupancy from the ONU, for example) that the ONU has little or no upstream data to send to the OLT and therefore instruct the ONU to enter spaced sleep mode, without the ONU requesting it. In still other examples, the OLT may force the ONU to enter spaced sleep mode even though the ONU does have upstream data to send.

The method may further comprise communicating from the OLT to the ONU an instruction that the ONU should exit the power-saving mode.

When the ONU receives the instruction to exit the power saving mode and has been allowed time to decode it (which may be 6 downstream frames), the OLT may allocate transmit opportunities in subsequent frames that are earlier than the earliest time. The OLT may further allocate multiple non-contiguous transmit opportunities to the ONU in a single frame. In other words, normal rules apply.

The method may further comprise communicating from the ONU to the OLT an indication of whether the ONU has data to transmit to the OLT. The instruction that the ONU should exit the power-saving mode may be communicated in response to an indication that the ONU has data to transmit to the OLT. An indication of whether the ONU has data to transmit to the OLT may be an indication that the ONU has data to transmit to the OLT or may be an indication that the ONU has no data to transmit to the OLT. Alternatively, an indication of whether the ONU has data to transmit to the OLT may be an indication of how much data the ONU has to transmit to the OLT (in an upstream buffer, for example).

The OLT may instruct the ONU to exit the power saving mode in response to an indication from the ONU that the ONU has more upstream data to send. This can improve ONU performance by allowing the ONU to be allocated other transmit opportunities earlier in the upstream frame and therefore improve the upstream bandwidth of the ONU.

In other examples, The OLT may instruct the ONU to exit the power saving mode in response to a timeout. In other words, the ONU may be taken out of spaced sleep mode periodically.

The method may further comprise communicating from the OLT to the ONU an assurance that the ONU will be allocated exactly one opportunity per upstream frame to transmit data to the OLT during an upstream frame and one or more subsequent upstream frames.

In some examples, the assurance may be implicit in the instruction to enter sleep mode.

Advantageously, if the transmit opportunities are provided in a contiguous block, the transmitter may not need to be powered on but idle between transmit opportunities in an upstream frame. This may further improve power consumption by allowing the transmitter to only be powered on during allocations and powered down during idle periods between allocations.

Moreover, if there is only one transmit opportunity (allocation) per upstream frame then this maximises the time between allocations during which the transmitter can be powered down. This may further improve power consumption.

One or more of:
the request for the ONU to enter the power-saving mode;
the control message;
the instruction that the ONU should enter the power-saving mode;
the assurance that the ONU will be allocated exactly one opportunity per upstream frame to transmit data;
the indication of whether the ONU has data to transmit to the OLT; and
the instruction that the ONU should exit the power-saving mode,
may be communicated in a header of a downstream frame.

One or more of the messages mentioned above may be contained in the physical control block of the downstream GTC header (PCBd).

One or more of the messages mentioned above may be a PLOAM message.

One or more of the messages mentioned above may be an embedded OAM message.

PLOAM messages are fast and exchanged with the downstream/upstream data (in the frame header or in the upload). OMCI messages are exchanged less frequently, usually for configuration changes on a daily or weekly basis. Advantageously, by communicating sleep request and allow messages over the PLOAM channel, the ONU can be configured into and out of spaced sleep quickly in response to changes in upstream data load. This may improve the flexibility of the system and reduce power consumption of the ONU.

The control message may be communicated in a payload of a downstream frame. This may be in an out of band channel. For example, the control message may be communicated via the OMCI channel. One example of how this might work in practice is that the earliest time may be configured ahead of time without the ONU entering the spaced sleep mode. The ONU may then be put into and taken out of the spaced sleep mode dynamically using PLOAM messages in response to changes in demand for upstream bandwidth.

The method may further comprise communicating from the ONU to the OLT an indication that the ONU is capable of entering the power-saving mode.

Some ONUs may not support spaced sleep mode. Even so, an OLT may instruct the ONU to enter spaced sleep mode speculatively. If the ONU does not support spaced sleep mode then it may respond with an error or may not respond at all. Since spaced sleep mode does not require a change in the visible behaviour from the OLT's point of view (spaced sleep may be considered as an assurance regarding the OLTs allocation behaviour), it may not result in an error at the OLT if an ONU that does not support spaced sleep is instructed to enter spaced sleep mode. Nevertheless, an OLT may decide that it should not unilaterally place the ONU in spaced sleep mode if it does not know from the capabilities of the ONU that the ONU supports spaced sleep mode. This may be because allocations that are later in the upstream frame may be more beneficial to ONUs that do support spaced sleep mode.

Even if the OLT is unaware of the ONU's capabilities, the OLT may still respond to requests to enter spaced sleep mode from an ONU (this is because the ONU will not request spaced sleep if it is not supported by the ONU).

Some OLTs may not support spaced sleep mode. In this case, a request from the ONU to enter spaced sleep mode may result in an error message or no response from the OLT.

The indication that the ONU is capable of entering the power-saving mode, may be communicated in a payload of an upstream frame. The indication may be in an out of band channel. More specifically the indication may be communicated as an OMCI message transported over a dedicated GEM channel.

The OLT may discover ONU capabilities through communication of a capability data structure (or table) via handshaking on the OMCI channel.

An Optical Line Terminal, OLT, or an Optical Network Unit, ONU, configured to perform any of the methods described above is also provided.

Computer software is also provided. The computer software comprises instructions that, when executed on a processor of a an Optical Line Terminal, OLT, or an Optical Network Unit, ONU, cause the OLT or ONU to perform any of the methods described above.

The ONU and/or ONT may be provided by computer systems. A computer system may comprise a processor, memory, data input and data output. The memory of the computer system may store instructions in the form of software. When executed on the processor, the instructions may cause the computer system to perform the method steps required to implement the techniques described in this application.

### Brief Description of the Drawings

A number of non-limiting examples are described with reference to the Figures in which:
Figure 1 illustrates a Passive Optical Network (PON) 100;
Figure 2 illustrates another PON 200;
Figure 3 illustrates an example of downstream and upstream transmissions in a PON;
Figure 4 illustrates the "cyclic sleep" mode of power saving described in the prior art;
Figure 5 illustrates two successive upstream frames of an ONU performing a method as described in this application;
Figure 6 illustrates an example implementation of a spaced sleep mode;
Figure 7 illustrates a method of controlling an ONU in a PON;
Figure 8 illustrates another method of controlling an ONU in a PON;
Figure 9 illustrates an ONU;
Figure 10 illustrates an OLT; and
Figure 11 illustrates a system comprising an ONU and an OLT.

### Detailed Description of Specific Embodiments

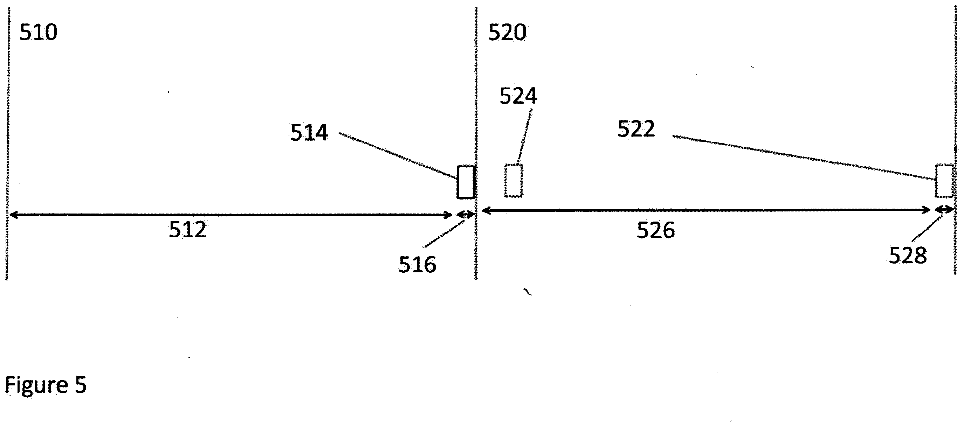

In existing PON data transmissions, the ONU is not aware of the time (in counts) within an upstream frame (for example a frame of 125µs) at which it will be allocated time to transmit data, until it receives the BWmap corresponding to that upstream frame. This is illustrated in Figure 5, which shows two successive upstream frames. Example frames of 125µs will be used to describe examples of the disclosed method.

In an Nth upstream frame 510 in Figure 5, there is an initial period 512 of 122µs during which no transmit opportunity is provided to the ONU. The ONU is allocated a transmit opportunity 514 of 3µs 516 at the end of the Nth upstream frame 510. A transmit opportunity may also termed a "transmit allocation" or simply an "allocation". In the (N+1)th upstream frame, 520 the ONU will be allocated another transmit opportunity. However, the ONU will not be able to determine whereabouts in the frame the allocation will be until the BWmap corresponding to that frame has been received. In option A, the ONU may be I allocated a transmit opportunity towards the end of the frame 522. Alternatively, in option B, the ONU may be allocated a transmit opportunity near the start of the frame 524. In option A, the ONU may have another idle period 526 of 122µs before the next allocation of 3µs 528. In option B, the ONU will be required to transmit again almost immediately and the idle period will be very short.

As described above, in the upstream direction, the ONU is allocated a length of time to transmit data within each 125µs frame. PON line rates are increasing so that for a given upstream data rate a customer needs less time to transmit the data. Needing less time to transmit data could allow the ONU to switch off its transmitter between upstream frames and thereby significantly lower power consumption. Because a certain amount of time is needed to turn-on the ONU transmitter, the ONU must be able to determine the length of time for which it is safe to power down its transmitter.

One reason for data rate increase is that improved components in the transceivers (e.g. sensors) allows reduced error rates at higher clock speeds.

If the customer device (ONU) is provided with an indication of when a transmit opportunity will be allocated in frames beyond the current upstream frame, the ONU is able to sleep (for example, turn off) the transmitter between transmit opportunities during normal operation. The ONU may be assured by the central office (which is in control of telling the customer device when it may transmit) that it will not be given opportunities to transmit that are very close together in time. Specifically, it will not be asked to transmit right at the end of one frame and then right at the beginning of the next frame (i.e. a very short gap), as illustrated by option B (allocation 524) in Figure 5.

In some cases, the OLT will guarantee a transmit opportunity towards the end of a frame. This is advantageous because the ONU can keep the transmitter powered down for most of the frame and only power the transmitter up at the end of the frame in time for the transmit opportunity.

In cases where the OLT is unable to guarantee a transmit opportunity late on in the frame (e.g. because many ONUs are in spaced sleep mode), the OLT will provide a guarantee that is relatively early in the frame. This would seemingly only provide the ONU with a short period of time in which the transmitter can power down. However, the OLT may aim to provide the transmit opportunity as soon after the guaranteed time as possible (i.e. relatively early in the frame). The ONU may therefore power down the transmitter as soon as the transmit opportunity is over for the remainder of the frame (which may be for most of the frame if the opportunity was close to the start of the frame).

As can be seen from the two examples above, power savings can be made whether the parameter defining the earliest transmit opportunity is towards the start of the frame or towards the end of the frame. In either case, the OLT can improve power savings at the ONU by providing a transmit opportunity as close to the guaranteed earliest transmit opportunity as possible. In doing so, the OLT may aim to schedule transmit an opportunity for an OLT in spaced sleep mode at roughly the same time during each frame.

A proposed solution is to define a new "spaced sleep" modes for PON whereby:
- the ONU requests spaced sleep by sending a "Sleep Request (Spaced)" message to the OLT
- the OLT allows spaced sleep by sending a "Sleep Allow (Spaced)" message to the ONU
- during spaced sleep, the OLT allocates no more than one upstream time period (note: the upstream time period can have multiple allocations but they must be contiguous) to the ONU per frame and never earlier in the frame than the start time allocated in the bandwidth map of the downstream frame that contains the "Sleep Allow (Spaced)" message
- during spaced sleep, the ONU powers down its transmitter after sending an upstream burst (which may contain multiple allocations) in frame n and powers its transmitter up again in time ready for the start time in the subsequent frame n+1; and
- the OLT can end spaced sleep by sending a "Sleep Allow (OFF)" message
- the OLT may optionally end spaced sleep in other ways, for example by sending a forced wakeup indication (FWI) bit in the bandwidth map

Unlike existing sleep modes, the spaced sleep mode does not skip frames. This means that upstream data can still be transmitted while the ONU is in spaced sleep mode.

Unlike existing sleep modes, the new mode is dynamic because it is configurable within the message that requests the sleep mode, not using the management channel used by other power saving modes.

Unlike existing sleep modes, the size of the ONU upstream grant could be fixed to deliberately cap the ONU upstream bit rate regardless of how much data the ONU wants to send.

Unlike existing sleep modes, the OLT could force the ONU into this power saving mode unilaterally, unlike other modes in which the ONU must first request to be allowed to sleep.

As can be seen from the above, the OLT may throttle the upstream bandwidth of the ONUs and force power-saving. This can be used in case of emergency.

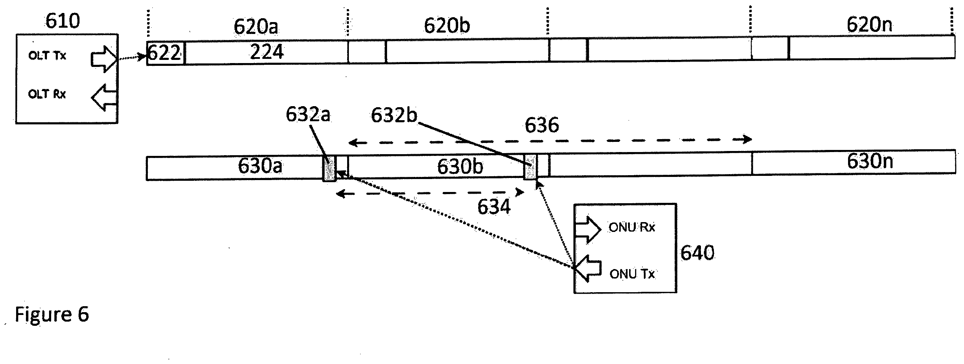

Figure 6 illustrates an example implementation of a spaced sleep mode. The OLT 610 transmits a plurality of downstream frames 620a - 620n. Each downstream frame comprises a BWmap 622 and a data payload 624. The upstream frames 630a - 630n each comprise a plurality of data bursts from different ONUs. Two upstream data bursts 632a, 632b from an ONU 640 are shown in consecutive upstream frames 630a, 630b. In spaced sleep mode, the transmitter of the ONU is placed in a low power mode during the interval 634 between the upstream data bursts. The ONU does not skip any upstream frames. In contrast, in a watchful sleep mode, the transmitter remains powered down and the ONU skips a number of frames 636. The ONU would therefore forego transmit opportunity 632b.

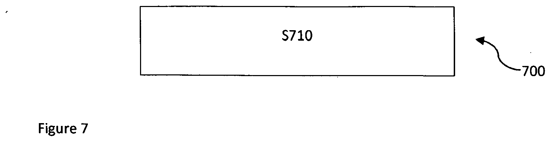

Figure 7 illustrates a method of controlling an ONU in a PON. The method comprises the following steps:
S710: communicating a control message from an Optical Line Terminal, OLT, to the ONU, wherein the control message comprises an indication of an earliest time during an upstream frame and one or more subsequent upstream frames at which the ONU will be allocated an opportunity to transmit data to the OLT.

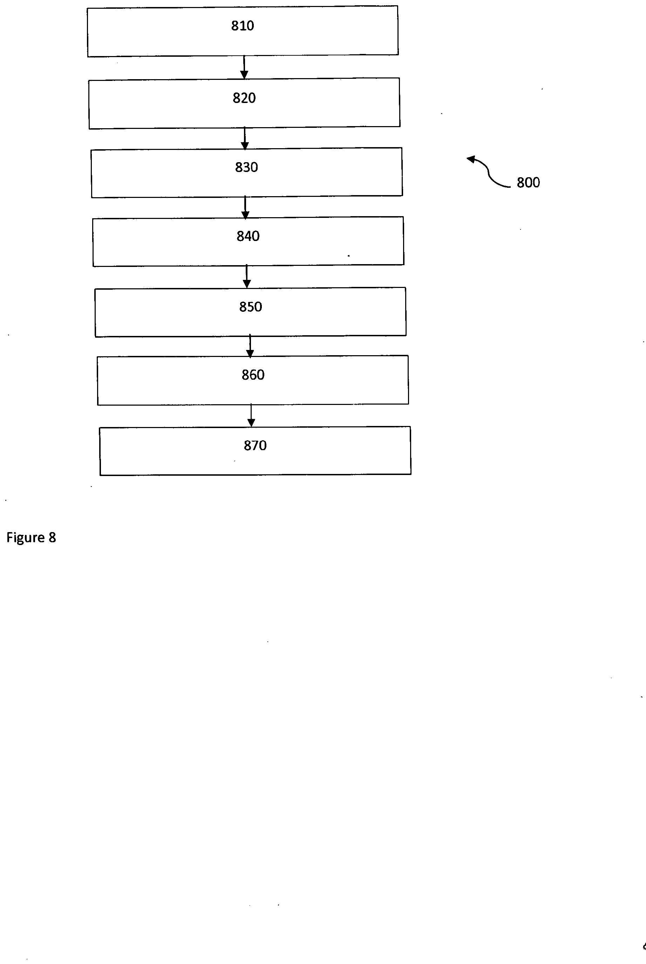

Figure 8 illustrates another method of controlling an ONU in a PON. The method comprises the following steps:
S810: communicating from the ONU to the OLT an indication that the ONU is capable of entering the power-saving mode;
S820: communicating from the ONU to an OLT a request for the ONU to enter the power-saving mode;
S830: communicating from the OLT to the ONU an instruction that the ONU should enter a power-saving mode;
S840: communicating a control message from the OLT to the ONU, wherein the control message comprises an indication of an earliest time during an upstream frame and one or more subsequent upstream frames at which the ONU will be allocated an opportunity to transmit data to the OLT;
S850: communicating from the OLT to the ONU an assurance that the ONU will be allocated exactly one opportunity per upstream frame to transmit data to the OLT during an upstream frame and one or more subsequent upstream frames;
S860: communicating from the ONU to the OLT an indication of whether the ONU has data to transmit to the OLT; and
S870: communicating from the OLT to the ONU an instruction that the ONU should exit the power-saving mode.

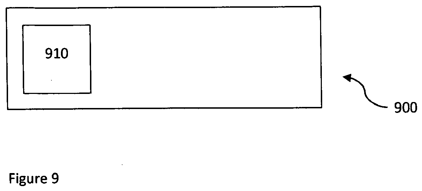

Figure 9 illustrates an ONU 900. The ONU comprises a transmitter 910.

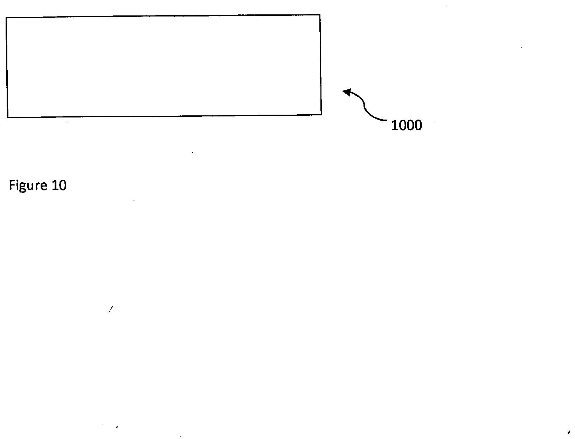

Figure 10 illustrates an OLT 1000.

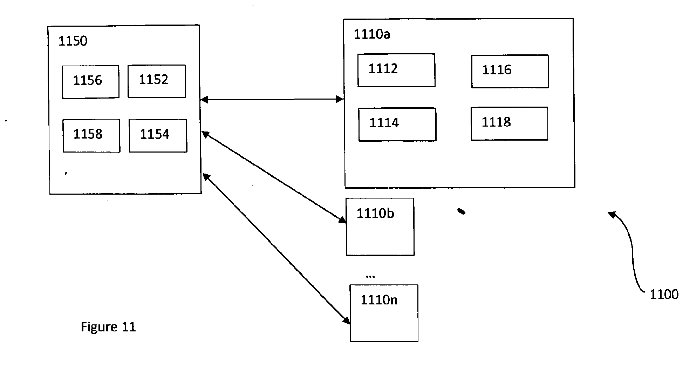

Figure 11 illustrates a system 1100 comprising an ONU 1110a and an OLT 1150. The ONU comprises a transmitter 1112, a receiver, 1114, a processor 1116, and memory 1118. The memory of the ONU contains software comprising computer instructions that are executable on the processor to perform a method as described above. The system further comprise one or more additional ONUs 1110b - 1110n. The OLT comprises a transmitter 1512, a receiver, 1514, a processor 1516, and memory 1518. The memory of the OLT contains software comprising computer instructions that are executable on the processor to perform a method as described above. The OLT 1150 is in communication with the ONUs 1110a - 1110n across a passive optical network, as shown by the arrows in Figure 11. Communication across the network is achieved via the transmitters and receivers of the ONUs and OLT, which are coupled to the PON.

As used in this application an "ONU" is a network element interfacing the end-user access facilities and the optical distribution network (ODN). In contexts outside of this application, a distinction may exist between an ONT and an ONU. However, for the purposes of this application, an ONT is considered as a special (single-user) case of an ONU. From the PON TC layer functionality point of view, these two entities are identical. Therefore, the term "ONU" in this application applies to both ONU and ONT, unless specifically otherwise stated.

Where an entity is described as "communicating" a request, message, indication, assurance, allocation, instruction etc., this should be interpreted as the entity is either sending or receiving the message. For example, "an ONU communicates a control message" can mean an ONU sends or receives the control message. Where a direction of the message is provided, such as, "an ONU communicates a control message from an OLT to the ONU", this means that the ONU receives the control message. Likewise, "an OLT communicates a control message from the OLT to an ONU" means the OLT sends the control message.

## Claims

1. A method of controlling an Optical Network Unit (120), ONU, in a Passive Optical Network (100), PON, the method comprising:
communicating a control message from an Optical Line Terminal (110), OLT, to the ONU, wherein the control message comprises an indication of an earliest time during an upstream frame and one or more subsequent upstream frames at which the ONU will be allocated an opportunity to transmit data to the OLT.

2. The method of claim 1, further comprising communicating from the OLT (110) to the ONU an instruction that the ONU (120) should enter a power-saving mode.

3. The method of claim 2, wherein the ONU (120) is configured to enter the power-saving mode within a predetermined number of frames after receiving the instruction that the ONU should enter the power-saving mode.

4. The method of claim 2 or claim 3, wherein the control message comprises an indication of a time during a corresponding upstream frame at which the ONU (120) is allocated an opportunity to transmit data to the OLT (110), and wherein the control message and the instruction that the ONU should enter a power-saving mode are communicated to the ONU in the same downstream frame.

5. The method of any of claims 2 to 4, wherein, whilst in the power-saving mode, a transmitter of the ONU (120) is configured in a low-power state after an opportunity to transmit data to the OLT (110) in a first upstream frame has ended, wherein the transmitter remains in the low-power state for a remaining portion of the upstream frame and an initial portion of a second upstream frame immediately subsequent to the first upstream frame, wherein the transmitter is configured in a transmission state for sending data to the OLT prior to the earliest time indicated in the control message during the second upstream frame.

6. The method of any of claims 2 to 5, wherein the method further comprises communicating from the ONU (120) to the OLT (110) a request for the ONU to enter the power-saving mode, wherein the instruction that the ONU should enter the power-saving mode is communicated in response to the request.

7. The method of any of claims 2 to 6, further comprising communicating from the OLT (110) to the ONU (120) an instruction that the ONU should exit the power-saving mode.

8. The method of claim 7, further comprising communicating from the ONU (120) to the OLT (110) an indication of whether the ONU has data to transmit to the OLT, wherein the instruction that the ONU should exit the power-saving mode is communicated in response to an indication that the ONU has data to transmit to the OLT.

9. The method of any preceding claim, further comprising one or more of:
communicating from the OLT (110) to the ONU (120) an assurance that the ONU will be allocated exactly one opportunity per upstream frame to transmit data to the OLT during an upstream frame and one or more subsequent upstream frames;
communicating, from the ONU to the OLT, an indication that the ONU is capable of entering the power-saving mode; and
communicating, from the ONU to the OLT, in a payload of an upstream frame, an indication that the ONU is capable of entering the power-saving mode.

10. The method of any preceding claim, wherein one or more of:
the request for the ONU (120) to enter the power-saving mode;
the control message;
the instruction that the ONU should enter the power-saving mode;
the assurance that the ONU will be allocated exactly one opportunity per upstream frame to transmit data;
the indication of whether the ONU has data to transmit to the OLT (110); and
the instruction that the ONU should exit the power-saving mode,
are communicated in a header of a downstream frame.

11. The method of any preceding claim, wherein the control message is communicated in a payload of a downstream frame.

12. An Optical Line Terminal (110), OLT, configured to send a control message to an Optical Network Unit (120), ONU, wherein the control message comprises an indication of an earliest time during an upstream frame and one or more subsequent upstream frames at which the ONU will be allocated an opportunity to transmit data to the OLT.

13. An Optical Network Unit (120), ONU, configured to receive a control message from an Optical Line Terminal (110), OLT, wherein the control message comprises an indication of an earliest time during an upstream frame and one or more subsequent upstream frames at which the ONU will be allocated an opportunity to transmit data to the OLT.

14. Computer software comprising instructions that, when executed on a processor of a an Optical Line Terminal (110), OLT, cause the OLT to send a control message to an ONU (120), wherein the control message comprises an indication of an earliest time during an upstream frame and one or more subsequent upstream frames at which the ONU will be allocated an opportunity to transmit data to the OLT.

15. Computer software comprising instructions that, when executed on a processor of a an Optical Network Unit (120), ONU, cause the ONU to receive a control message from an OLT (110), wherein the control message comprises an indication of an earliest time during an upstream frame and one or more subsequent upstream frames at which the ONU will be allocated an opportunity to transmit data to the OLT.

## Patentansprüche

1. Verfahren zum Steuern einer optischen Netzwerkeinheit (Optical Network Unit, ONU) (120) in einem passiven optischen Netzwerk (Passive Optical Network, PON) (100), wobei das Verfahren umfasst:
Kommunizieren einer Steuerungsnachricht von einem optischen Leitungsanschluss (Optical Line Terminal, OLT) (110) an die ONU, wobei die Steuerungsnachricht eine Angabe einer frühesten Zeit während eines Aufwärtsrahmens und eines oder mehrerer nachfolgender Aufwärtsrahmen umfasst, zu der der ONU eine Möglichkeit zugeordnet wird, Daten an den OLT zu übermitteln.

2. Verfahren nach Anspruch 1, ferner umfassend das Kommunizieren einer Anweisung von dem OLT (110) an die ONU, dass die ONU (120) in einen Energiesparmodus wechseln sollte.

3. Verfahren nach Anspruch 2, wobei die ONU (120) so konfiguriert ist, dass innerhalb einer vorab bestimmten Anzahl an Rahmen nach Erhalt der Anweisung, dass die ONU in den Energiesparmodus wechseln sollte, in den Energiesparmodus gewechselt wird.

4. Verfahren nach Anspruch 2 oder Anspruch 3, wobei die Steuerungsnachricht eine Angabe einer Zeit während eines entsprechenden Aufwärtsrahmens umfasst, zu der der ONU (120) eine Möglichkeit zugeordnet wird, Daten an den OLT (110) zu übertragen, und wobei die Steuerungsnachricht und die Anweisung, dass die ONU in einen Energiesparmodus wechseln sollte, in demselben Abwärtsrahmen an die ONU kommuniziert werden.

5. Verfahren nach einem der Ansprüche 2 bis 4, wobei, im Energiesparmodus, ein Sender der ONU (120) in einem stromsparenden Zustand konfiguriert ist, nachdem eine Möglichkeit zum Übermitteln von Daten an den OLT (110) in einem ersten Aufwärtsrahmen geendet hat, wobei der Sender für einen verbleibenden Abschnitt des Aufwärtsrahmens und einen anfänglichen Abschnitt eines zweiten Aufwärtsrahmens, der unmittelbar auf den ersten Aufwärtsrahmen folgt, in dem stromsparenden Zustand verbleibt, wobei der Sender in einem Übermittlungszustand konfiguriert ist, um Daten vor der frühesten in der Steuerungsnachricht angegebenen Zeit während des zweiten Aufwärtsrahmens an den OLT zu senden.

6. Verfahren nach einem der Ansprüche 2 bis 5, wobei das Verfahren ferner das Kommunizieren einer Anforderung von der ONU (120) an den OLT (110) umfasst, damit die ONU in den Energiesparmodus wechselt, wobei die Anweisung, dass die ONU in den Energiesparmodus wechseln sollte, als Antwort auf die Anforderung kommuniziert wird.

7. Verfahren nach einem der Ansprüche 2 bis 6, ferner umfassend das Kommunizieren einer Anweisung von dem OLT (110) an die ONU (120), dass die ONU den Energiesparmodus beenden sollte.

8. Verfahren nach Anspruch 7, ferner umfassend das Kommunizieren einer Angabe von der ONU (120) an den OLT (110), ob die ONU über Daten zum Übermitteln an den OLT verfügt, wobei die Anweisung, dass die ONU den Energiesparmodus beenden sollte, als Antwort auf eine Angabe kommuniziert wird, dass die ONU über Daten zum Übermitteln an den OLT verfügt.

9. Verfahren nach einem vorhergehenden Anspruch, weiter umfassend eines oder mehrere von:
Kommunizieren einer Zusicherung von dem OLT (110) an die ONU (120), dass der ONU genau eine Möglichkeit pro Aufwärtsrahmen zugeordnet wird, während eines Aufwärtsrahmens und eines oder mehrerer nachfolgender Aufwärtsrahmen Daten an den OLT zu übermitteln;
Kommunizieren, von der ONU an den OLT, einer Angabe, dass die ONU zum Wechseln in den Energiesparmodus fähig ist; und
Kommunizieren, von der ONU an den OLT, in einer Nutzlast eines Aufwärtsrahmens, einer Angabe, dass die ONU zum Wechseln in den Energiesparmodus fähig ist.

10. Verfahren nach einem vorhergehenden Anspruch, wobei eine oder mehrere von:
der Anforderung, dass die ONU (120) in den Energiesparmodus wechselt;
der Steuerungsnachricht;
der Anweisung, dass die ONU in den Energiesparmodus wechseln sollte;
der Zusicherung, dass der ONU genau eine Möglichkeit pro Aufwärtsrahmen zugeordnet wird, Daten zu übermitteln;
der Angabe, ob die ONU über Daten zum Übermitteln an den OLT (110) verfügt; und
der Anweisung, dass die ONU den Energiesparmodus beenden sollte,
in einem Header eines Abwärtsrahmens kommuniziert werden.

11. Verfahren nach einem vorhergehenden Anspruch, wobei die Steuerungsnachricht in einer Nutzlast eines Abwärtsrahmens kommuniziert wird.

12. Optischer Leitungsanschluss (Optical Line Terminal, OLT) (110), konfiguriert zum Senden einer Steuerungsnachricht an eine optische Netzwerkeinheit (Optical Network Unit, ONU) (120), wobei die Steuerungsnachricht eine Angabe einer frühesten Zeit während eines Aufwärtsrahmens und eines oder mehrerer nachfolgender Aufwärtsrahmen umfasst, zu der der ONU eine Möglichkeit zugeordnet wird, Daten an den OLT zu übermitteln.

13. Optische Netzwerkeinheit (Optical Network Unit, ONU) (120), konfiguriert zum Empfangen einer Steuerungsnachricht von einem optischen Leitungsanschluss (Optical Line Terminal, OLT) (110), wobei die Steuerungsnachricht eine Angabe einer frühesten Zeit während eines Aufwärtsrahmens und eines oder mehrerer nachfolgender Aufwärtsrahmen umfasst, zu der der ONU eine Möglichkeit zugeordnet wird, Daten an den OLT zu übermitteln.

14. Computersoftware, umfassend Anweisungen, die bei Ausführung auf einer Verarbeitungseinheit eines optischen Leitungsanschlusses (Optical Line Terminal, OLT) (110) veranlassen, dass der OLT eine Steuerungsnachricht an eine ONU (120) sendet, wobei die Steuerungsnachricht eine Angabe einer frühesten Zeit während eines Aufwärtsrahmens und eines oder mehrerer nachfolgender Aufwärtsrahmen umfasst, zu der der ONU eine Möglichkeit zugeordnet wird, Daten an den OLT zu übermitteln.

15. Computersoftware, umfassend Anweisungen, die bei Ausführung auf einer Verarbeitungseinheit einer optischen Netzwerkeinheit (Optical Network Unit, ONU) (120) veranlassen, dass die ONU eine Steuerungsnachricht von einem OLT (110) empfängt, wobei die Steuerungsnachricht eine Angabe einer frühesten Zeit während eines Aufwärtsrahmens und eines oder mehrerer nachfolgender Aufwärtsrahmen umfasst, zu der der ONU eine Möglichkeit zugeordnet wird, Daten an den OLT zu übermitteln.

## Revendications

1. Un procédé de commande d'une unité de réseau optique (120), ONU, dans un réseau optique passif (100), PON, le procédé comprenant :
la communication d'un message de commande à partir d'un terminal de ligne optique (110), OLT, vers l'ONU, où le message de commande contient une indication d'un moment le plus précoce au cours d'une trame en amont et d'une ou de plusieurs trames en amont subséquentes auxquelles à l'ONU sera attribuée une opportunité de transmission de données à l'OLT.

2. Le procédé selon la Revendication 1, comprenant en outre la communication de l'OLT (110) à l'ONU d'une instruction indiquant que l'ONU (120) devrait entrer dans un mode d'économie d'énergie.

3. Le procédé selon la Revendication 2, où l'ONU (120) est configurée de façon à entrer dans le mode d'économie d'énergie à l'intérieur d'un nombre de trames prédéterminé après la réception de l'instruction indiquant que l'ONU devrait entrer dans le mode d'économie d'énergie.

4. Le procédé selon la Revendication 2 ou 3, où le message de commande contient une indication d'un instant au cours d'une trame en amont correspondante auquel à l'ONU (120) est attribuée une opportunité de transmission de données à l'OLT (110), et où le message de commande et l'instruction indiquant que l'ONU devrait entrer dans un mode d'économie d'énergie sont communiqués à l'ONU dans la même trame en aval.

5. Le procédé selon l'une quelconque des Revendications 2 à 4 où, pendant qu'il se trouve dans le mode d'économie d'énergie, un émetteur de l'ONU (120) est configuré dans un état de faible puissance après la fin d'une opportunité de transmission de données à l'OLT (110) dans une première trame en amont, où l'émetteur demeure dans l'état de faible puissance pendant une partie restante de la trame en amont et une partie initiale d'une deuxième trame en amont immédiatement subséquente à la première trame en amont, où l'émetteur est configuré dans un état de transmission pour l'envoi de données à l'OLT avant le moment le plus précoce indiqué dans le message de commande au cours de la deuxième trame en amont.

6. Le procédé selon l'une quelconque des Revendications 2 à 5, où le procédé comprend en outre la communication de l'ONU (120) à l'OLT (110) d'une demande indiquant à l'ONU d'entrer dans le mode d'économie d'énergie, où l'instruction indiquant que l'ONU devrait entrer dans le mode d'économie d'énergie est communiquée en réponse à la demande.

7. Le procédé selon l'une quelconque des Revendications 2 à 6, comprenant en outre la communication de l'OLT (110) à l'ONU (120) d'une instruction indiquant que l'ONU devrait sortir du mode d'économie d'énergie.

8. Le procédé selon la Revendication 7, comprenant en outre la communication de l'ONU (120) à l'OLT (110) d'une indication indiquant si l'ONU possède des données à transmettre à l'OLT, où l'instruction indiquant que l'ONU devrait sortir du mode d'économie d'énergie est communiquée en réponse à une indication indiquant que l'ONU possède des données à transmettre à l'OLT.

9. Le procédé selon l'une quelconque des Revendications précédentes, comprenant en outre une ou plusieurs opérations parmi :
la communication de l'OLT (110) à l'ONU (120) d'une garantie qu'à l'ONU sera attribuée exactement une opportunité par trame en amont de transmission de données à l'OLT au cours d'une trame en amont et d'une ou de plusieurs trames en amont subséquentes,
la communication, de l'ONU à l'OLT, d'une indication indiquant que l'ONU est capable d'entrer dans le mode d'économie d'énergie, et
la communication, de l'ONU à l'OLT, dans une charge utile d'une trame en amont, d'une indication indiquant que l'ONU est capable d'entrer dans le mode d'économie d'énergie.

10. Le procédé selon l'une quelconque des Revendications précédentes, où un ou plusieurs éléments parmi :
la demande adressée à l'ONU (120) d'entrer dans le mode d'économie d'énergie,
le message de commande,
l'instruction indiquant que l'ONU devrait entrer dans le mode d'économie d'énergie,
la garantie qu'à l'ONU sera attribuée exactement une opportunité par trame en amont de transmission de données,
l'indication si l'ONU possède des données à transmettre à l'OLT (110), et
l'instruction indiquant que l'ONU devrait sortir du mode d'économie d'énergie,
sont communiqués dans un entête d'une trame en aval.

11. Le procédé selon l'une quelconque des Revendications précédentes, où le message de commande est communiqué dans une charge utile d'une trame en aval.

12. Un terminal de ligne optique (110), OLT, configuré de façon à envoyer un message de commande à une unité de réseau optique (120), ONU, où le message de commande contient une indication d'un moment le plus précoce au cours d'une trame en amont et d'une ou de plusieurs trames en amont subséquentes auxquelles à l'ONU sera attribuée une opportunité de transmission de données à l'OLT.

13. Une unité de réseau optique (120), ONU, configurée de façon à recevoir un message de commande à partir d'un terminal de ligne optique (110), OLT, où le message de commande contient une indication d'un moment le plus précoce au cours d'une trame en amont et d'une ou de plusieurs trames en amont subséquentes auxquelles à l'ONU sera attribuée une opportunité de transmission de données à l'OLT.

14. Un logiciel informatique comprenant des instructions qui, lorsqu'elles sont exécutées sur un processeur d'un terminal de ligne optique (110), OLT, amènent l'OLT à envoyer un message de commande à une ONU (120), où le message de commande contient une indication d'un moment le plus précoce au cours d'une trame en amont et d'une ou de plusieurs trames en amont subséquentes auxquelles à l'ONU sera attribuée une opportunité de transmission de données à l'OLT.

15. Un logiciel informatique comprenant des instructions qui, lorsqu'elles sont exécutées sur un processeur d'une unité de réseau optique (120), ONU, amènent l'ONU à recevoir un message de commande à partir d'un OLT (110), où le message de commande contient une indication d'un moment le plus précoce au cours d'une trame en amont et d'une ou de plusieurs trames en amont subséquentes auxquelles à l'ONU sera attribuée une opportunité de transmission de données à l'OLT.
